# EUROPEAN PATENT APPLICATION

(11) **EP 4 383 400 A1**
(43) Date of publication of application: **12.06.2024**
(21) Application number: 23214579.7
(22) Date of filing: 06.12.2023
(51) Int. Cl.: H01M 10/0587, H01M 50/107, H01M 50/119, H01M 50/152, H01M 50/159, H01M 50/531, H01M 50/545, H01M 50/548, H01M 50/559

(54) **CYLINDRICAL SECONDARY BATTERY**

(30) Priority: 06.12.2022 KR 20220168590
(71) Applicant: Samsung SDI Co., Ltd., Yongin-si, Gyeonggi-do 17084 (KR)
(72) Inventor: JUNG, Hyun Ki, 17084 Yongin-si (KR)
(74) Representative: Marks & Clerk LLP

(57) **Abstract**

A cylindrical secondary battery includes: an electrode assembly including a positive electrode plate, a separator, and a negative electrode plate; a case accommodating the electrode assembly and electrically connected to the negative electrode plate; a rivet terminal penetrating a lower surface of the case and electrically connected to the positive electrode plate; and a cap plate sealing an upper portion of the case, wherein the negative electrode plate includes a negative electrode current collector having a first surface and a second surface, a first negative electrode active material layer coated with a negative electrode active material on the first surface, a second negative electrode active material layer coated with the negative electrode active material on the second surface, and a negative electrode uncoated portion, and a length of the first negative electrode active material layer is different from that of the second negative electrode active material layer.

## Description

### BACKGROUND

### 1. Field

Aspects of some embodiments of the present disclosure relate to a cylindrical secondary battery.

### 2. Description of the Related Art

A secondary battery is a power storage system that provides relatively excellent energy density capable of converting electrical energy into chemical energy and storing the same. Compared to non-rechargeable primary batteries, secondary batteries are generally rechargeable and may be widely used in IT devices such as smart phones, cellular phones, notebooks, and tablet PCs. Recently, interest in electric vehicles has increased to reduce environmental pollution, and accordingly, high-capacity secondary batteries are being adopted for electric vehicles. These secondary batteries may desirably have characteristics such as relatively high density, relatively high power, and stability.

The above information disclosed in this Background section is only for enhancement of understanding of the background and therefore the information discussed in this Background section does not necessarily constitute prior art.

### SUMMARY

Aspects of some embodiments of the present disclosure include a cylindrical secondary battery capable of maximizing or improving space efficiency of an electrode plate.

A cylindrical secondary battery according to some embodiments of the present disclosure includes: an electrode assembly including a positive electrode plate, a separator, and a negative electrode plate; a case accommodating the electrode assembly and electrically connected to the negative electrode plate; a rivet terminal penetrating the lower surface of the case and electrically connected to the positive electrode plate; and a cap plate sealing an upper portion of the case, wherein the negative electrode plate includes a negative electrode current collector having a first surface and a second surface opposite to the first surface, a first negative electrode active material layer coated with a negative electrode active material on the first surface, a second negative electrode active material layer coated with the negative electrode active material on the second surface, and a negative electrode uncoated portion on which the negative electrode active material is not coated, and the length of the first negative electrode active material layer is different from that of the second negative electrode active material layer.

According to some embodiments, the negative electrode uncoated portion may include: a first front-end negative electrode uncoated portion formed on the first surface of the negative electrode current collector and positioned at a winding front end; a first terminating-end negative electrode uncoated portion formed on the first surface of the negative electrode current collector and positioned at a winding terminating end; a first upper-end negative electrode uncoated portion formed on the first surface of the negative electrode current collector and positioned at an upper end; a second front-end negative electrode uncoated portion formed on the second surface of the negative electrode current collector and positioned at the winding front end; a second terminating-end negative electrode uncoated portion formed on the second surface of the negative electrode current collector and positioned at the winding terminating end; and a second upper-end negative electrode uncoated portion formed on the second surface of the negative electrode current collector and positioned at the upper end.

According to some embodiments, the first front-end negative electrode uncoated portion may be formed to have a larger length than the second front-end negative electrode uncoated portion.

According to some embodiments, the second terminating-end negative electrode uncoated portion may be formed to have a larger length than the first terminating-end-uncoated portion.

According to some embodiments, the first upper-end negative electrode uncoated portion and the second upper-end negative electrode uncoated portion may be continuously formed from the winding front end to the winding terminating end.

According to some embodiments, the first upper-end negative electrode uncoated portion and the second upper-end negative electrode uncoated portion may be separated into a plurality of tabs through notching or cutting.

According to some embodiments, the first upper-end negative electrode uncoated portion and the second upper-end negative electrode uncoated portion may not be provided in some regions of the winding front end and some regions of the winding terminating end.

According to some embodiments, the second terminating-end negative electrode uncoated portion may be in contact with a side portion of the case.

According to some embodiments, the separator may extend to cover the second terminating-end negative electrode uncoated portion and may be in contact with a side portion of the case.

According to some embodiments, the positive electrode plate may include a positive electrode current collector having a first surface and a second surface opposite to the first surface; a first positive electrode active material layer coated with a positive electrode active material on the first surface; a second positive electrode active material layer coated with the positive electrode active material on the second surface; and a positive electrode uncoated portion on which the positive electrode active material is not coated.

According to some embodiments, the first positive electrode active material layer and the second positive electrode active material layer may be continuously formed from the winding front end to the winding terminating end.

According to some embodiments, the positive electrode uncoated portion may be positioned at a lower end of the positive electrode current collector and may be continuously formed from the winding front end to the winding terminating end.

According to some embodiments, the positive electrode uncoated portion may be separated into a plurality of tabs through notching or cutting.

According to some embodiments, the positive electrode uncoated portion may not be provided in some regions of the winding front end and some regions of the winding terminating end.

According to some embodiments, the positive electrode uncoated portion may include: a first front-end positive electrode uncoated portion formed on the first surface of the positive electrode current collector and positioned at the winding front end; a first terminating-end positive electrode uncoated portion formed on the first surface of the positive electrode current collector and positioned at the winding terminating end; a first lower-end positive electrode uncoated portion formed on the first surface of the positive electrode current collector and positioned at the lower end; and a second lower-end positive electrode uncoated portion formed on the second surface of the positive electrode current collector and positioned at the lower end.

According to some embodiments, the length of the first front-end positive electrode uncoated portion may correspond to the length of one turn of winding of the positive electrode plate.

According to some embodiments, the positive electrode uncoated portion may include: a first front-end positive electrode uncoated portion formed on the first surface of the positive electrode current collector and positioned at the winding front end; a first terminating-end positive electrode uncoated portion formed on the first surface of the positive electrode current collector and positioned at the winding terminating end; a first lower-end positive electrode uncoated portion formed on the first surface of the positive electrode current collector and positioned at the lower end; a second front-end positive electrode uncoated portion formed on the second surface of the positive electrode current collector and positioned at the winding front end; a second terminating-end positive electrode uncoated portion formed on the second surface of the positive electrode current collector and positioned at the winding terminating end; and a second lower-end positive electrode uncoated portion formed on the second surface of the positive electrode current collector and positioned at the lower end.

According to some embodiments, the length of the first front-end positive electrode uncoated portion may be greater than that of the second front-end positive electrode uncoated portion.

At least some of the above and other features of the invention are set out in the claims.

### BRIEF DESCRIPTION OF DRAWINGS

FIG. 1 is a perspective view illustrating a cylindrical secondary battery according to some embodiments of the present disclosure.
FIG. 2 is a cross-sectional view of the cylindrical secondary battery of FIG. 1 according to some embodiments of the present disclosure.
FIG. 3A is a cross-sectional view showing a state before the electrode assembly of FIG. 1 is wound according to some embodiments of the present disclosure.
FIGS. 3B and 3C are plan views illustrating the positive and negative plates of FIG. 3A according to some embodiments of the present disclosure.
FIGS. 3D and 3E are cross-sectional views illustrating a wound state of the electrode assembly of FIG. 3A according to some embodiments of the present disclosure.
FIG. 4A is a cross-sectional view showing a state before an electrode assembly is wound according to some embodiments of the present disclosure.
FIGS. 4B and 4C are plan views illustrating positive and negative electrode plates of FIG. 4A according to some embodiments of the present disclosure.
FIGS. 4D and 4E are cross-sectional views illustrating a wound state of the electrode assembly of FIG. 4A according to some embodiments of the present disclosure.
FIG. 5A is a cross-sectional view showing a state before an electrode assembly is wound according to some embodiments of the present disclosure.
FIGS. 5B and 5C are plan views illustrating positive and negative electrode plates of FIG. 5A according to some embodiments of the present disclosure.
FIGS. 5D and 5E are cross-sectional views illustrating a wound state of the electrode assembly of FIG. 5A according to some embodiments of the present disclosure.

### DETAILED DESCRIPTION

Hereinafter, aspects of some embodiments of the present disclosure will be described in more detail with reference to the accompanying drawings.

Aspects of some embodiments of the present disclosure are described in more detail to more completely explain embodiments according to the present disclosure to those skilled in the art, and the following examples may be modified in various other forms. The present disclosure, however, may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the term "below" can encompass both an orientation of above and below.

Aspects of some embodiments of the present disclosure will now be described in more detail with reference to the accompanying drawings to the extent that a person skilled in the art to which embodiments according to the present disclosure belongs can easily implement embodiments according to the present disclosure.

Here, the same reference numerals are attached to parts having similar configurations and operations throughout the specification. In addition, when a part is said to be electrically coupled to another part, this includes not only a case where it is directly connected but also a case where it is connected with another element interposed therebetween.

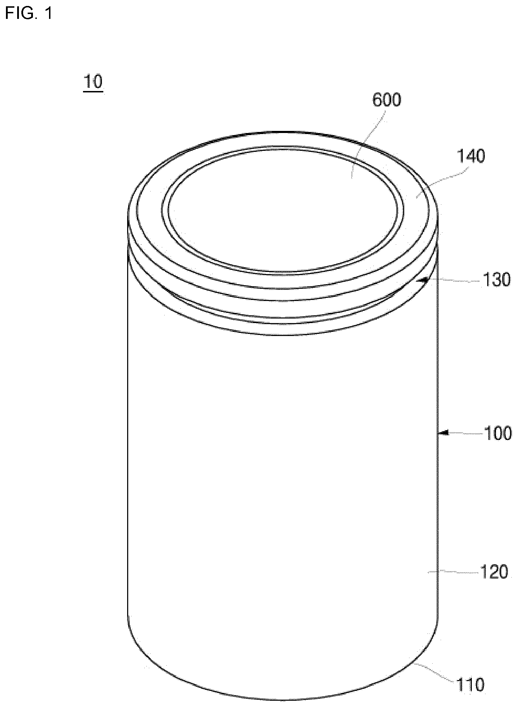

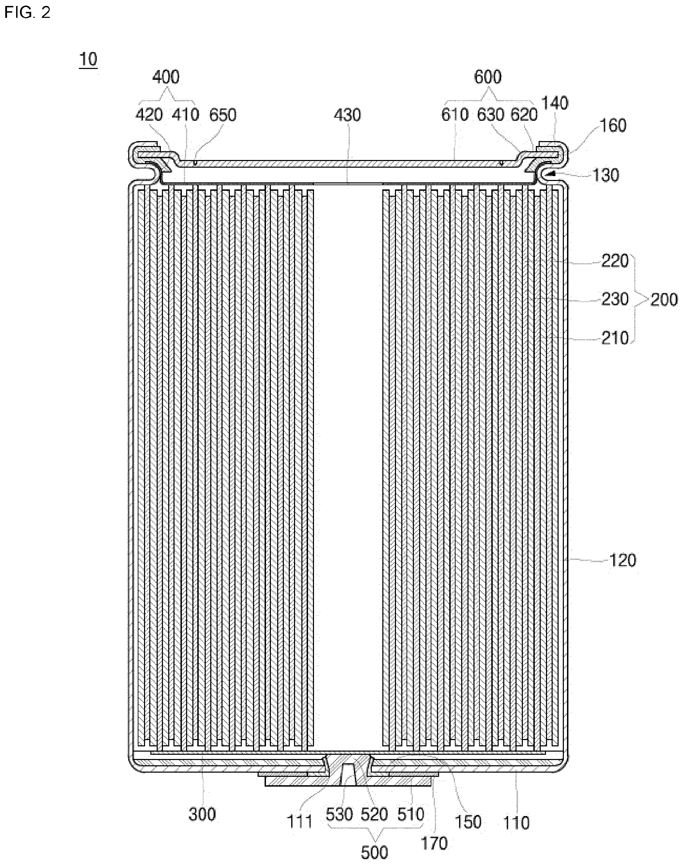

FIG. 1 is a perspective view illustrating a cylindrical secondary battery according to some embodiments of the present disclosure. FIG. 2 is a cross-sectional view of the cylindrical secondary battery of FIG. 1.

Referring to FIGS. 1 and 2, the cylindrical secondary battery 10 according to some embodiments of the present disclosure may include a case 100, an electrode assembly 200, a positive electrode current collector plate 300, a negative electrode current collector plate 400, a rivet terminal 500, and a cap plate 600.

The case 100 includes a circular bottom portion 110 and a side portion 120 extending a certain length in an upward direction from an edge of the bottom portion 110. The bottom portion 110 and the side portion 120 of the case 100 may be integrally formed. According to some embodiments, the bottom portion 110 may have a circular shape in a plan view, and the side portion may have a generally cylindrical shape.

The bottom portion 110 may be shaped of a flat circular plate and may have a terminal hole 111 penetrating the center. The bottom portion 110 may be coupled by inserting the rivet terminal 500 into the terminal hole 111. A first gasket 150 for sealing and electrical insulation may be further interposed between the terminal hole 111 and the rivet terminal 500. The first gasket 150 may be inserted into the terminal hole 111 and may extend to a lower portion of the bottom portion 110. The first gasket 150 may block a contact between the rivet terminal 500 and the case 100, thereby electrically separating the rivet terminal 500 and the case 100. The terminal hole 111 of the bottom portion 110 of the case 100 may be sealed by the first gasket 150. The first gasket 150 may be made of a resin material such as polyethylene (PE), polypropylene (PP), or polyethylene terephthalate (PET).

During the manufacturing process of the cylindrical secondary battery 10, an upper portion of the case 100 may be opened. Therefore, in the cylindrical secondary battery 10, the electrode assembly 200 may be inserted through the opened upper portion of the case 100 together with an electrolyte solution during the manufacturing process. After the electrolyte solution and the electrode assembly 200 are inserted into the case 100, the cap plate 600 is coupled to the opened upper portion to seal the case 100. Here, the electrolyte solution serves to enable movement of lithium ions between a positive electrode plate 210 and a negative electrode plate 220, constituting the electrode assembly 200. The electrolyte solution may be a non-aqueous organic electrolyte solution that is a mixture of a lithium salt and a high-purity organic solvent. In addition, the electrolyte solution may be a polymer using a polymer electrolyte or a solid electrolyte, but the type of electrolyte solution is not limited herein. In some embodiments, when the case 100 is turned upside down, the bottom portion 110 may be positioned above the case 100 and the cap plate 600 may be coupled to a lower-end portion of the case 100.

The electrode assembly 200 includes the positive electrode plate 210, the negative electrode plate 220, and a separator 230. After the positive electrode plate 210, the negative electrode plate 220, and the separator 230 are stacked, the electrode assembly 200 is wound from a winding front end to have a substantially cylindrical shape. In addition, in the electrode assembly 200, a positive electrode uncoated portion on which a positive electrode active material is not coated, may protrude from the positive electrode plate 210 in a downward direction, and a negative electrode uncoated portion on which the negative electrode active material is not coated, may protrude from the negative electrode plate 220 in an upward direction.

The positive electrode current collector plate 300 may be a circular metal plate shaped to correspond to the lower surface of the electrode assembly 200. The area (or size) of the positive electrode current collector plate 300 may be equal to or smaller than the area (or size) of an upper surface of the electrode assembly 200. The positive electrode current collector plate 300 may be made of aluminium (Al). The positive electrode current collector plate 300 may be fixed and electrically connected to the rivet terminal 500 by welding in a state in which the lower surface is in contact with an upper surface of the rivet terminal 500. The positive electrode current collector plate 300 becomes a passage for current flow between the positive electrode plate 210 of the electrode assembly 200 and the rivet terminal 500.

The negative electrode current collector plate 400 may include a circular planar portion 410 corresponding to the upper surface of the electrode assembly 200 and an extending portion 420 extending upward from an edge of the planar portion 410. A lower surface of the flat portion 410 may come into contact with the upper surface of the electrode assembly 200. The lower surface of the flat portion 410 may be fixed and electrically connected to the negative electrode plate 220 exposed to the upper portion of the electrode assembly 200 by welding in a state of being in contact with the upper surface of the electrode assembly 200. In addition, a through hole 430 may be formed in the flat portion 410. At least one through hole 430 may be formed in the flat portion 410. According to some embodiments, the through hole 430 may be a passage through which the electrolyte solution injected into the case 100 moves or a passage through which internal gas moves.

The extending portion 420 may be bent from an edge of the flat portion 410 and extend upward. This extending portion 420 may be in contact with and be coupled to a beading part 130 of the case 100. Accordingly, the extending portion 420 may have a round shape so as to correspond to the beading part 130. For example, the extending portion 420 may be coupled by welding in a state of being in contact with the inner surface of the beading part 130 of the case 100. In addition, a second gasket 160 is positioned above the extending portion 420 so that the negative electrode current collector plate 400 and the cap plate 600 can be electrically insulated. In addition, a plurality of extending portions 420 may be provided so as to be spaced apart from each other along the edge of the flat portion 410. The negative electrode current collector plate 400 may be a current flow passage between the negative electrode plate 220 of the electrode assembly 200 and the case 100. That is, the case 100 may be a negative electrode terminal.

The rivet terminal 500 may be inserted into the terminal hole 111 provided in the bottom portion 110 of the case 100 and electrically connected to the positive electrode current collector plate 300. That is, the rivet terminal 500 may be a positive electrode terminal. The rivet terminal 500 and the case 100 may have different polarities. The rivet terminal 500 may be made of the same or similar material as the positive electrode current collector plate 300 and the positive electrode plate 210. In the rivet terminal 500, the diameter of the portion exposed to the lower part of the case 100 and the diameter located inside the case 100 may be greater than the diameter located in the terminal hole 111.

The rivet terminal 500 may include a head 510 exposed to a lower portion of the case 100 and a fastening portion 520 positioned inside the case 100 and coupled to the positive electrode current collector plate 300. The rivet terminal 500 may be inwardly coupled to the terminal hole 111 of the case 100 from the outside. Here, the head 510 may be located outside the case 100. In addition, the fastening portion 520 may be compressively deformed (compression-molded) by riveting, and compressed in a state in which the first gasket 150 is interposed on the upper portion of the bottom portion 110. Here, the fastening portion 520 may have a diameter gradually increasing from the terminal hole 111 toward the inside of the case 100. In other words, the diameter of an upper end of the fastening portion 520 may be greater than the diameter of the lower end of the fastening portion 520. Here, the lower end of the fastening portion 520 may refer to a portion connected to the head 510. The diameter of the upper end of the fastening portion 520 may be greater than the diameter of the terminal hole 111, and the diameter of the terminal hole 111 may be greater than the diameter of the lower end of the fastening portion 520. In addition, the head 510 may be in close contact with the lower portion of the bottom portion 110 in a state in which the first gasket 150 is interposed therebetween. Here, the first gasket 150 may be interposed between the rivet terminal 500 and the terminal hole 111. The rivet terminal 500 may be electrically connected to the positive electrode plate 210 of the electrode assembly 200 through the positive electrode current collector plate 300.

In addition, an insulation member 170 may be further interposed between the head 510 and the bottom portion 110 of the case 100. That is, the head 510 is located below the bottom portion 110, and in a region where the head 510 and the bottom portion 110 overlap on a plane, the insulation member 170 may be interposed to block an electrical contact between the rivet terminal 500 and the case 100. A diameter of the insulation member 170 may be greater than a diameter of the head 510. Accordingly, the outer periphery (or end) of the insulation member 170 may extend to the outside of the head 510 and be exposed.

The first gasket 150 is interposed between the fastening portion 520 and the terminal hole 111 of the case 100, and a lower end portion thereof may extend between the head 510 and the bottom portion 110 of the case 100. Here, the lower end of the first gasket 150 may come into contact with the insulation member 170. That is, the first gasket 150 and the insulation member 170 may be interposed between the rivet terminal 500 and the bottom portion 110 of the case 100, and thus, the rivet terminal 500 and the case 100 may be electrically insulated from each other and sealed. Of course, the first gasket 150 and the insulation member 170 may be integrally formed.

The rivet terminal 500 may further include a welding groove 530 having a depth (e.g., a set or predetermined depth) in the direction of the fastening portion 520 from the lower surface of the head 510. That is, the welding groove 530 may pass through the center of the head 510 and be formed upwardly from the bottom of the fastening portion 520. Since the thickness of the fastening portion 520 is reduced by the welding groove 530, welding between the rivet terminal 500 and the positive electrode current collector plate 300 may be facilitated from the outside of the case 100.

The cap plate 600 is a circular metal plate and may be coupled to an upper end of the case 100. An upper surface of the cap plate 600 may be exposed to the outside. The cap plate 600 is coupled to the upper end of the case 100 in a state in which the second gasket 160 is interposed therebetween, thereby preventing or reducing instances of electrical connection with the case 100. The cap plate 600 is not electrically connected to the positive electrode or the negative electrode of the electrode assembly 200, and thus may not have a separate electrical polarity.

The cap plate 600 may include a first region 610 positioned above the negative electrode current collector plate 400, a second region 620 positioned outside the first region 610, and a third region 630 positioned between the first region 610 and the second region 620. The first region 610 is located at the center of the cap plate 600 and may include a relatively large area. The second region 620 may be formed to protrude upward from the first region 610. The second region 620 may be interposed between the beading part 130 and a crimping part 140 of the case 100 and coupled to the case 100.

The third region 630 may be inclined or bent to connect the first region 610 and the second region 620 having different heights. The second region 620 may be fixed in a state of being located between the beading part 130 and the crimping part 140 of the case 100. For example, in a state in which the second gasket 160 is interposed above the beading part 130 of the case 100, the second region 620 may be seated on the upper portion of the second gasket 160. Thereafter, the crimping part 140 of the case 100 may be bent inwardly of the cap plate 600 to press the second gasket 160, thereby coupling the cap plate 600 and the case 100.

The second gasket 160 may be in close contact between the case 100 and the cap plate 600. In addition, the second gasket 160 may be in close contact with the inside of the beading part 130 and the crimping part 140. An end of the second gasket 160 located between the cap plate 600 and the crimping part 140 may extend into the case 100 more than the end of the crimping part 140 and may be exposed to the outside. The end of the second gasket 160 located between the cap plate 600 and the beading part 130 may protrude more toward the inside of the case 100 than the beading part 130. The second gasket 160 may be made of a resin material such as polyethylene (PE), polypropylene (PP), or polyethylene terephthalate (PET).

The cap plate 600 may include a vent 650 formed in the first region 610 and opened at a set pressure. The vent 650 may have a smaller thickness than other regions of the cap plate 600. The vent 650 may be a notch formed in a downward direction from the upper surface of the cap plate 600. The vent 650 may be formed in a portion adjacent to the third region 630 in the first region 610. According to some embodiments, the vent 650 may be in the form of continuous notches and may be circular. According to some embodiments, the vent 650 may be in the form of spaced apart notches.

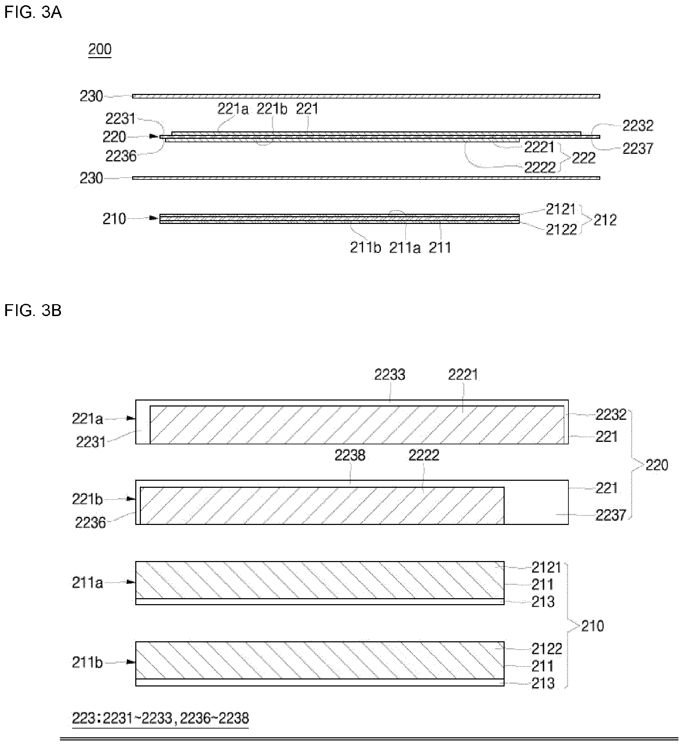

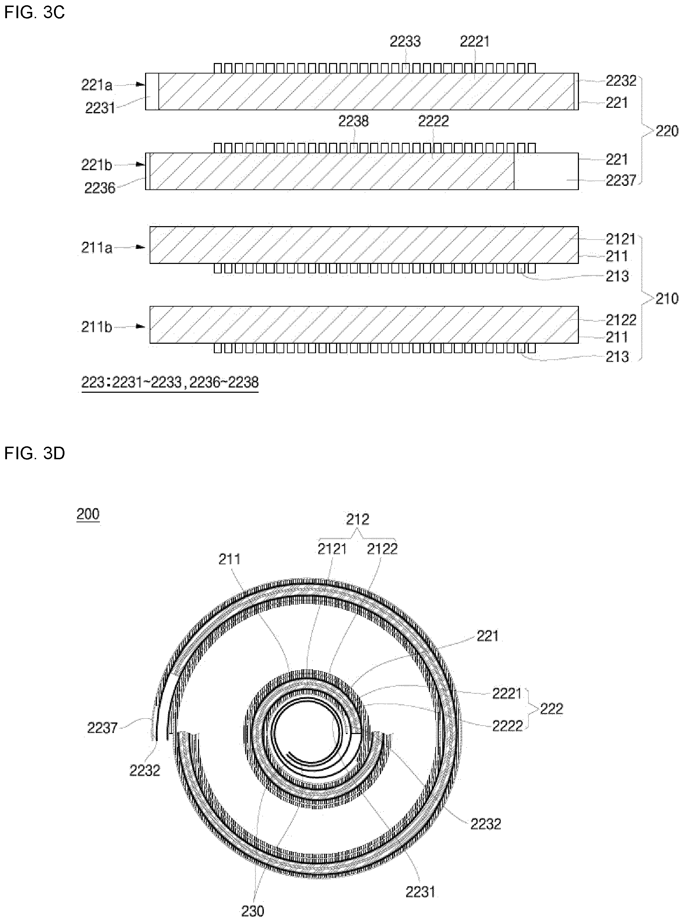

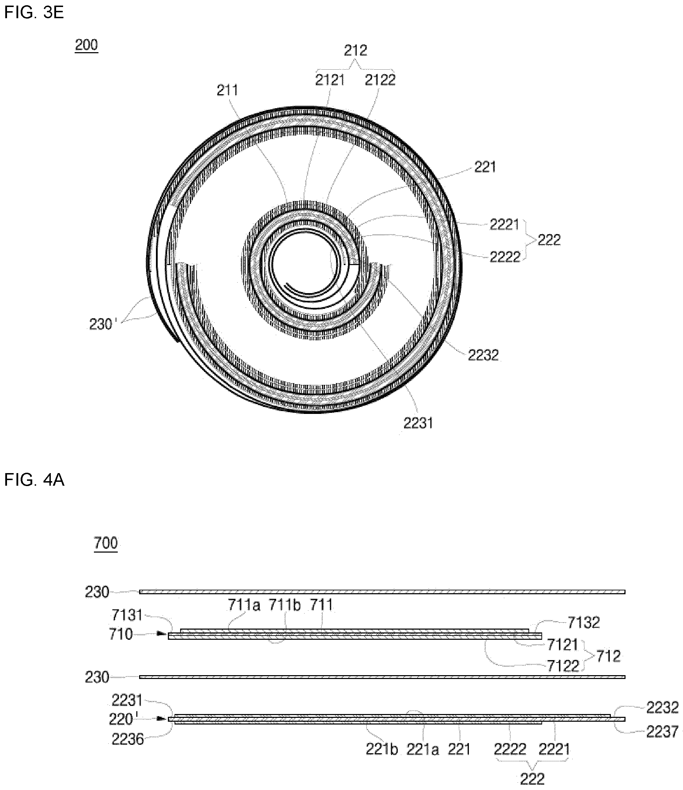

FIG. 3A is a cross-sectional view showing a state before the electrode assembly of FIG. 1 is wound. FIGS. 3B and 3C are plan views illustrating the positive and negative plates of FIG. 3A. FIGS. 3D and 3E are cross-sectional views illustrating a wound state of the electrode assembly of FIG. 3A.

Hereinafter, the electrode assembly 200 will be described in more detail with reference to FIGS. 3A to 3E.

As shown in FIGS. 3A and 3B, the positive electrode plate 210 may include a positive electrode current collector 211 formed of a metal foil such as aluminium (Al), a positive electrode active material layer 212 that is coated with a positive electrode active material on the positive electrode current collector 211, and a positive electrode uncoated portion 213 that is not coated with the positive electrode active material. Here, as the positive electrode active material, a chalcogenide compound may be used, and for example, complex metal oxides such as LiCoO₂, LiMn₂O₄, LiNiO₂, or LiNiMnO₂ may be used.

The positive electrode current collector 211 may include a first surface (or inner surface) 211a and a second surface (or outer surface) 211b opposite to the first surface 211a. The positive electrode active material layer 212 includes a first positive electrode active material layer 2121 formed on the first surface 211a of the positive electrode current collector 211 and a second positive electrode active material layer 2122 formed on the second surface 211b. The first positive electrode active material layer 2121 and the second positive electrode active material layer 2122 may be continuously formed from the winding front end to the winding terminating end of the positive electrode current collector 211. That is, the first positive electrode active material layer 2121 and the second positive electrode active material layer 2122 have the same length. The positive electrode active material layer 212 is formed by applying a stripe coating method.

The positive electrode uncoated portion 213 may be formed at the lower end of the positive electrode current collector 211, and may be equally formed on the first surface 211a and the second surface 211b of the positive electrode current collector 211. Here, the positive electrode uncoated portion 213 may protrude downward from the electrode assembly 200 and be electrically connected to the positive electrode current collector plate 300. In addition, the positive electrode uncoated portion 213 may be continuously formed from the winding front end to the winding terminating end of the positive electrode current collector 211. According to some embodiments, when the secondary battery 10 is turned over, the positive electrode uncoated portion 213 protrudes upward from the electrode assembly 200.

As shown in FIG. 3C, the positive electrode uncoated portion 213 may be separated into a plurality of tabs through notching or cutting. In this case, the positive electrode uncoated portion 213 may not be provided in some regions of the winding front end and some regions of the winding terminating end. After the electrode assembly 200 is wound, the positive electrode uncoated portion 213 may be bent, by compaction, toward a core axis or of the electrode assembly 200 in an outward direction, but this is not limited in the present disclosure.

As shown in FIGS. 3A and 3B, the negative electrode plate 220 may include a negative electrode current collector 221 formed of a metal foil such as copper (Cu) or nickel (Ni), a negative electrode active material layer 222 that is coated with the negative electrode active material on the negative electrode current collector 221, and a negative electrode uncoated portion 223 that is not coated with the negative electrode active material. Here, as the negative electrode active material, a carbon-based material, Si, Sn, tin oxide, tin alloy composite, transition metal oxide, lithium metal nitrite, or metal oxide may be used.

The negative electrode current collector 221 may include a first surface (or inner surface) 221a and a second surface (or outer surface) 221b that is opposite to the first surface 221a. The negative electrode active material layer 222 may include a first negative electrode active material layer 2221 formed on the first surface 221a of the negative electrode current collector 221 and a second negative electrode active material layer 2222 formed on the second surface 221b. The first negative electrode active material layer 2221 may be spaced apart from the winding front end and the winding terminating end of the negative electrode current collector 221. That is, the negative electrode uncoated portion 223 may be formed on the winding front end and winding terminating end of the first surface 221a of the negative electrode current collector 221. Similarly, the second negative electrode active material layer 2222 may be spaced apart from the winding front end and the winding terminating end of the negative electrode current collector 221. Accordingly, the negative electrode uncoated portion 223 may be formed on the winding front end and the winding terminating end of the second surface 221b of the negative electrode current collector 221. The negative electrode active material layer 222 is formed by applying both a stripe coating method and a pattern coating method.

In addition, the length of the first negative electrode active material layer 2221 may be greater than that of the second negative electrode active material layer 2222. This is because, as shown in FIG. 3D, the second negative electrode active material layer 2222 is not formed on the negative electrode current collector 221 in the last turn of winding the negative electrode plate 220.

The negative electrode uncoated portion 223 may be formed at an upper end of the negative electrode current collector 221, the winding front end, and the winding terminating end, respectively. In addition, the negative electrode uncoated portion 233 may be formed in different patterns on the first surface 221a and the second surface 221b of the negative electrode current collector 221.

For example, the negative electrode uncoated portion 223 formed on the first surface 221a of the negative electrode current collector 221 may include a first front-end negative electrode uncoated portion 2231 located at the winding front end of the negative electrode current collector 221, a first terminating-end negative electrode uncoated portion 2232 located at the winding terminating end of the negative electrode current collector 221, and a first upper-end negative electrode uncoated portion 2233 located at the upper end of the negative electrode current collector 221. The negative electrode uncoated portion 223 formed on the second surface 221b of the negative electrode current collector 221 may include a second front-end negative electrode uncoated portion 2236 located at the winding front end of the negative electrode current collector 221, a second terminating-end negative electrode uncoated portion 2237 located at the winding terminating end of the negative electrode current collector 221, and a second upper-end negative electrode uncoated portion 2238 located at the upper end of the negative electrode current collector 221.

The first upper-end negative electrode uncoated portion 2233 and the second upper-end negative electrode uncoated portion 2238 may protrude upward from the electrode assembly 200 and may be electrically connected to the negative electrode current collector plate 400. In some embodiments, when the secondary battery 10 is turned over, the first upper-end negative electrode uncoated portion 2233 and the second upper-end negative electrode uncoated portion 2238 protrude downward from the electrode assembly 200. The first upper-end negative electrode uncoated portion 2233 and the second upper-end negative electrode uncoated portion 2238 may be continuously formed from the winding front end to the winding terminating end of the negative electrode current collector 221. The first upper-end negative electrode uncoated portion 2233 and the second upper-end negative electrode uncoated portion 2238 may be separated into a plurality of tabs through notching or cutting, as shown in FIG. 3C. Here, the first upper-end negative electrode uncoated portion 2233 and the second upper-end negative electrode uncoated portion 2238 may not be provided in some regions of the winding front end and some regions of the winding terminating end. After the electrode assembly 200 is wound, the first upper-end negative electrode uncoated portion 2233 and the second upper-end negative electrode uncoated portion 2238 may be bent by compaction toward a core axis or of the electrode assembly 200 in an outward direction, but embodiments according to the present disclosure are not limited thereto.

The length of the first front-end negative electrode uncoated portion 2231 may be longer than that of the second front-end negative electrode uncoated portion 2236. This is because, as shown in FIG. 3D, at one turn when the negative electrode plate 220 starts winding, the first negative electrode active material layer 2221 is not formed on the negative electrode current collector 221.

The length of the second terminating-end negative electrode uncoated portion 2237 may be greater than that of the first terminating-end negative electrode uncoated portion 2232. This is because, as shown in FIG. 3D, the second negative electrode active material layer 2222 is not formed on the negative electrode current collector 221 in the last turn of winding the negative electrode plate 220.

As shown in FIG. 3D, the first positive electrode active material layer 2121 may face the second negative electrode active material layer 2222 with the separator 230 therebetween. Also, the second positive electrode active material layer 2122 may face the first negative electrode active material layer 2221 with the separator 230 interposed therebetween.

As shown in FIG. 3A, the electrode assembly 200 may be wound after the separator 230, the negative electrode plate 220, the separator 230, and the positive electrode plate 210 are stacked in that order from the upper portion. In addition, as shown in FIG. 3D, the separator 230 may be positioned at the center (or the winding front end) of the electrode assembly 200, and the negative electrode plate 220 may be positioned at the outermost part (or the winding terminating end) of the electrode assembly 200. In particular, the second terminating-end negative electrode uncoated portion 2237 of the negative electrode plate 220 may be exposed at the outermost part of the electrode assembly 200, and the second terminating-end negative electrode uncoated portion 2237 may be in contact with the side portion 120 of the case 100.

According to some embodiments, as shown in FIG. 3E, a separator 230' may extend and be positioned at the outermost part of the electrode assembly 200. The separator 230' may extend to cover the second terminating-end negative electrode uncoated portion 2237. The separator 230' may be in contact with the side portion 120 of the case 100.

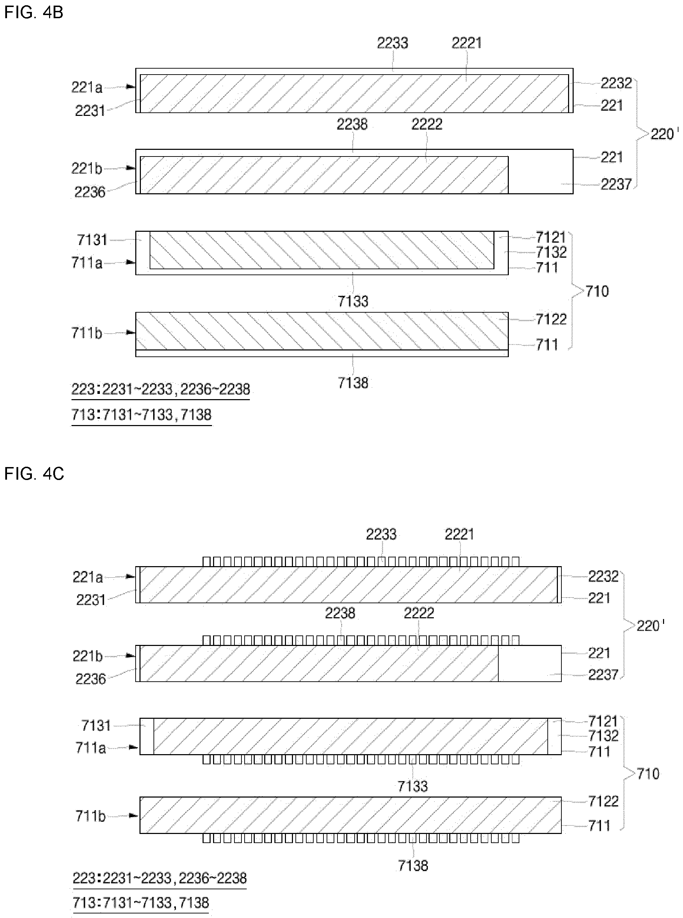

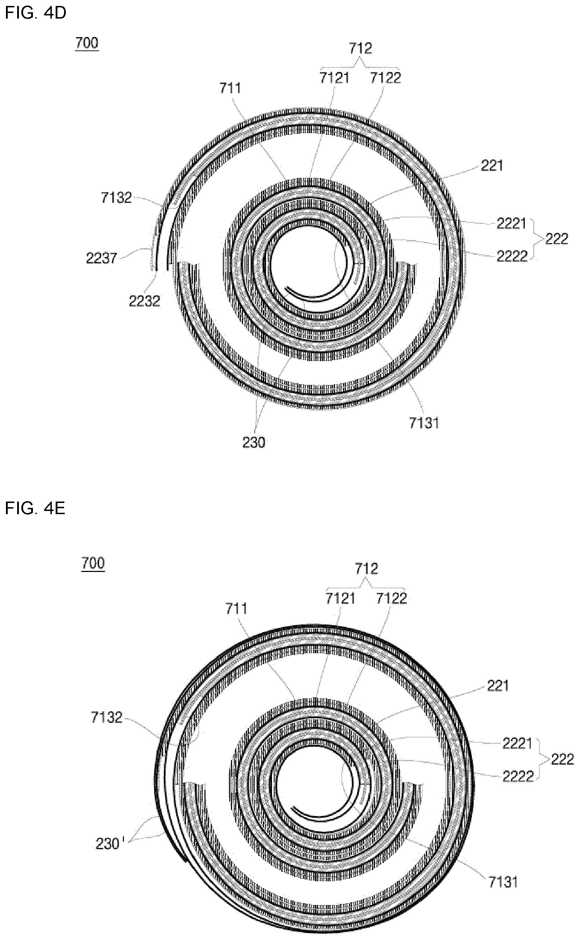

FIG. 4A is a cross-sectional view showing a state before an electrode assembly is wound according to some embodiments of the present disclosure. FIGS. 4B and 4C are plan views illustrating positive and negative electrode plates of FIG. 4A. FIGS. 4D and 4E are cross-sectional views illustrating a wound state of the electrode assembly of FIG. 4A.

Referring to FIGS. 4A and 4B, an electrode assembly 700 may include a positive electrode plate 710, a negative electrode plate 220', and a separator 230.

As shown in FIGS. 4A and 4B, the positive electrode plate 710 may include a positive electrode current collector 711, a positive electrode active material layer 712 that is coated with a positive electrode active material on the positive electrode current collector 711, and a positive electrode uncoated portion 713 that is not coated with the positive electrode active material. The positive electrode current collector 711 may include a first surface (or inner surface) 711a and a second surface (or outer surface) 711b that is opposite to the first surface 711a. The positive electrode active material layer 712 may include a first positive electrode active material layer 7121 formed on the first surface 711a of the positive electrode current collector 711 and a second positive electrode active material layer 7122 formed on the second surface 711b.

The first positive electrode active material layer 7121 may be spaced apart from a winding front end and a winding terminating end of the positive electrode current collector 711. That is, the positive electrode uncoated portion 713 may be formed at a winding front end and a winding terminating end of the first surface 711a of the positive electrode current collector 711. The first positive electrode active material layer 7121 is formed by applying both a stripe coating method and a pattern coating method.

The second positive electrode active material layer 7122 may be continuously formed from the winding front end to the winding terminating end of the positive electrode current collector 711. The second positive electrode active material layer 7122 is formed by applying a stripe coating method.

The length of the second positive electrode active material layer 7122 may be greater than that of the first positive electrode active material layer 7121. This is because, as shown in FIG. 4D, the first positive electrode active material layer 7121 is not formed on the positive electrode current collector 711 at one turn when the winding of the positive electrode plate 710 starts.

The positive electrode uncoated portion 713 may be formed at the lower end of the positive electrode current collector 711. In addition, the positive electrode uncoated portion 713 may also be formed on the winding front end and the winding terminating end of the first surface 711a of the positive electrode current collector 711. For example, the positive electrode uncoated portion 713 formed on the first surface 711a of the positive electrode current collector 711 may include a first front-end positive electrode uncoated portion 7131 located at the winding front end of the positive electrode current collector 711, a first terminating-end positive electrode uncoated portion 7132 located at the winding terminating end of the positive electrode current collector 711, and a first lower-end positive electrode uncoated portion 7133 located at the lower end of the positive electrode current collector 711. The positive electrode uncoated portion 713 formed on the second surface 711b of the positive electrode current collector 711 may include a second lower-end positive electrode uncoated portion 7138 located at the lower end of the positive electrode current collector 711.

The first lower-end positive electrode uncoated portion 7133 and the second lower-end positive electrode uncoated portion 7138 may protrude downward from the electrode assembly 700 and may be electrically connected to the positive electrode current collector plate 300. The first lower-end positive electrode uncoated portion 7133 and the second lower-end positive electrode uncoated portion 7138 may be continuously formed from the winding front end to the winding terminating end of the positive electrode current collector 711. The length of the first front-end positive electrode uncoated portion 7131 may correspond to the length of one turn of winding of the positive electrode plate 710.

The first lower-end positive electrode uncoated portion 7133 and the second lower-end positive electrode uncoated portion 7138 may be separated into a plurality of tabs through notching or cutting, as shown in FIG. 4C. Here, the first lower-end positive electrode uncoated portion 7133 and the second lower-end positive electrode uncoated portion 7138 may not be provided in some regions of the winding front end and some regions of the winding terminating end. After the electrode assembly 700 is wound, the first lower-end positive electrode uncoated portion 7133 and the second lower-end positive electrode uncoated portion 7138 may be bent, by compaction, toward a core axis or of the electrode assembly 700 in an outward direction, but this is not limited in the present disclosure.

A negative electrode plate 220' may be configured to correspond to the negative electrode plate 220 of FIGS. 3A to 3E. However, in the negative electrode plate 220' of FIGS. 4A to 4E, the length of the first front-end negative electrode uncoated portion 2231 and the length of the second front-end negative electrode uncoated portion 2236 may be the same.

As shown in FIG. 4A, the electrode assembly 700 may be wound after the separator 230, the positive electrode plate 710, the separator 230, and the negative electrode plate 220' are stacked in this order from the upper side. In addition, as shown in FIG. 4D, the separator 230 is located at the center (or the winding front end) of the electrode assembly 700, and the negative electrode plate 220' may be located at the outermost part (or the winding terminating end) of the electrode assembly 700. For example, the second terminating-end negative electrode uncoated portion 2237 of the negative electrode plate 220' may be exposed at the outermost part of the electrode assembly 700, and the second terminating-end negative electrode uncoated portion 2237 may be in contact with the side portion 120 of the case 100.

According to some embodiments, as shown in FIG. 4E, the separator 230' may extend to be positioned at the outermost part of the electrode assembly 700. The separator 230' may extend to cover the second terminating-end negative electrode uncoated portion 2237. The separator 230' may be in contact with the side portion 120 of the case 100.

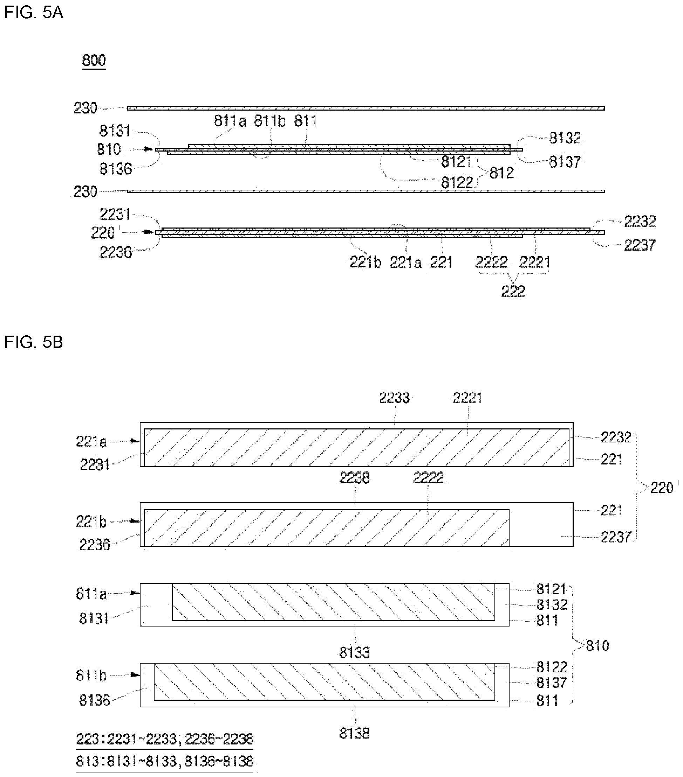

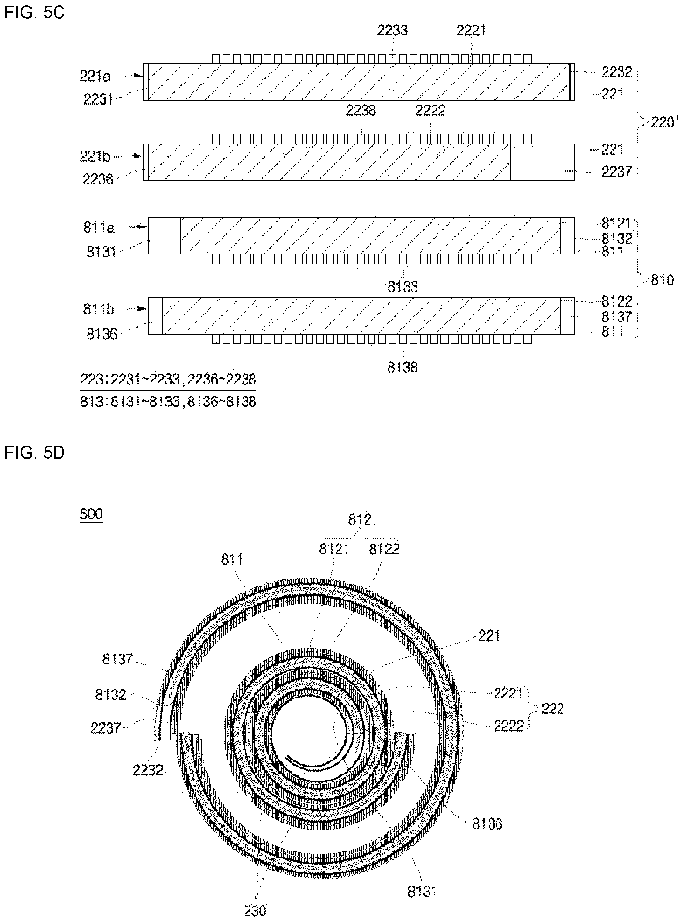

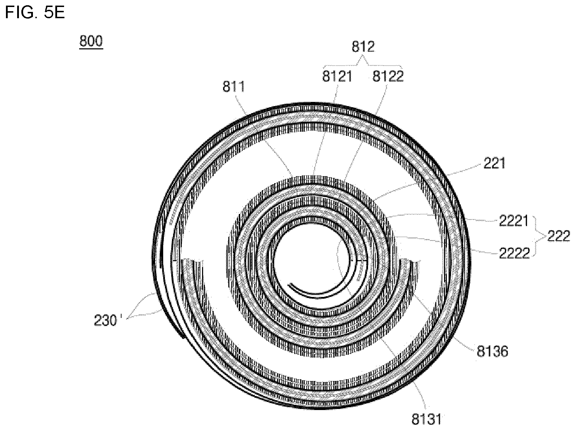

FIG. 5A is a cross-sectional view showing a state before an electrode assembly is wound according to some embodiments of the present disclosure. FIGS. 5B and 5C are plan views illustrating positive and negative electrode plates of FIG. 5A. FIGS. 5D and 5E are cross-sectional views illustrating a wound state of the electrode assembly of FIG. 5A.

Referring to FIGS. 5A and 5B, an electrode assembly 800 may include a positive electrode plate 810, a negative electrode plate 220', and a separator 230.

The positive electrode plate 810 includes a positive electrode current collector 811, a positive electrode active material layer 812 that is coated with a positive electrode active material on the positive electrode current collector 811, and a positive electrode uncoated portion 813 that is not coated with the positive electrode active material. The positive electrode current collector 811 may include a first surface (or inner surface) 811a and a second surface (or outer surface) 811b that is opposite to the first surface 811a. The positive electrode active material layer 812 may include a first positive electrode active material layer 8121 formed on the first surface 811a of the positive electrode current collector 811 and a second positive electrode active material layer 8122 formed on the second surface 811b.

The first positive electrode active material layer 8121 may be spaced apart from a winding front end and a winding terminating end of the positive electrode current collector 811. That is, the positive electrode uncoated portion 813 may be formed at the winding front end and the winding terminating end of the first surface 811a of the positive electrode current collector 811. Similarly, the second positive electrode active material layer 8122 may be spaced apart from the winding front end and the winding terminating end of the positive electrode current collector 811. Accordingly, the positive electrode uncoated portion 813 may be formed on the winding front end and the winding terminating end of the second surface 811b of the positive electrode current collector 811. The positive electrode active material layer 812 is formed by applying both a stripe coating method and a pattern coating method.

In addition, the length of the second positive electrode active material layer 8122 may be greater than that of the first positive electrode active material layer 8121. This is because, as shown in FIG. 5D, at one turn when the winding of the positive electrode plate 810 starts, the first positive electrode active material layer 8121 is not formed on the positive electrode current collector 811.

The positive electrode uncoated portion 813 may be formed at a lower end, a winding front end, and a winding terminating end of the positive electrode current collector 811, respectively. In addition, the positive electrode uncoated portion 813 may be formed in different patterns on the first surface 811a and the second surface 811b of the positive electrode current collector 811. For example, the positive electrode uncoated portion 813 formed on the first surface 811a of the positive electrode current collector 811 may include a first front-end positive electrode uncoated portion 8131 located at the winding front end of the positive electrode current collector 811, a first terminating-end positive electrode uncoated portion 8132 located at the winding terminating end of the positive electrode current collector 811, and a first lower-end positive electrode uncoated portion 8133 located at the lower end of the positive electrode current collector 811.

The positive electrode uncoated portion 813 formed on the second surface 811b of the positive electrode current collector 811 may include a second front-end positive electrode uncoated portion 8136 located at the winding front end of the positive electrode current collector 811, a second terminating-end positive electrode uncoated portion 8137 located at the winding terminating end of the positive electrode current collector 811, and a second lower-end positive electrode uncoated portion 8138 located at the lower end of the positive electrode current collector 811.

The first lower-end positive electrode uncoated portion 8133 and the second lower-end positive electrode uncoated portion 8138 may protrude downward from the electrode assembly 800 and may be electrically connected to the positive electrode current collector plate 300. The first lower-end positive electrode uncoated portion 8133 and the second lower-end positive electrode uncoated portion 8138 may be continuously formed from the winding front end to the winding terminating end of the positive electrode current collector 811.

As shown in FIG. 5C, the first lower-end positive electrode uncoated portion 8133 and the second lower-end positive electrode uncoated portion 8138 may be separated into a plurality of tabs through notching or cutting. Here, the first lower-end positive electrode uncoated portion 8133 and the second lower-end positive electrode uncoated portion 8138 may not be provided in some regions of the winding front end and some regions of the winding terminating end. After the electrode assembly 800 is wound, the first lower-end positive electrode uncoated portion 8133 and the second lower-end positive electrode uncoated portion 8138 may be bent, by compaction, toward a core axis or of the electrode assembly 800 in an outward direction, but this is not limited in the present disclosure.

The length of the first front-end positive electrode uncoated portion 8131 may be greater than that of the second front-end positive electrode uncoated portion 8136. For example, the length of the first front-end positive electrode uncoated portion 8131 may be greater than that of the second front-end positive electrode uncoated portion 8136 by a length of one turn at the start of winding.

As shown in FIG. 5A, the electrode assembly 800 may be wound after the separator 230, the positive electrode plate 810, the separator 230, and the negative electrode plate 220' are stacked in this order from the upper side. In addition, as shown in FIG. 5D, the separator 230 may be located at the center (or the winding front end) of the electrode assembly 800, and the negative electrode plate 220' may be located at the outermost (or the winding terminating end) of the electrode assembly 800. For example, at the outermost part of the electrode assembly 800, the second terminating-end negative electrode uncoated portion 2237 of the negative electrode plate 220' may be exposed, and the second terminating-end negative electrode uncoated portion 2237 may be in contact with the side portion 120 of the case 100.

According to some embodiments, as shown in FIG. 5E, the separator 230' may extend to be positioned at the outermost part of the electrode assembly 800. The separator 230' may extend to cover the second terminating-end negative electrode uncoated portion 2237. The separator 230' may be in contact with the side portion 120 of the case 100.

As described above, in the cylindrical secondary battery according to some embodiments of the present disclosure, space efficiency of an electrode plate can be maximized or relatively improved by coating an active material by using stripe coating and pattern coating.

While the foregoing embodiments are only illustrative embodiments for carrying out the cylindrical secondary battery according to some embodiments of the present disclosure, which is not limited to the embodiments specifically described herein, it will be understood by a person skilled in the art that various changes in form and details may be made therein without departing from the scope of embodiments according to the present disclosure as defined by the following claims, and their equivalents.

## Claims

1. A cylindrical secondary battery comprising:
an electrode assembly including a positive electrode plate, a separator, and a negative electrode plate;
a case accommodating the electrode assembly and electrically connected to the negative electrode plate;
a rivet terminal penetrating a lower surface of the case and electrically connected to the positive electrode plate; and
a cap plate sealing an upper portion of the case,
wherein the negative electrode plate includes a negative electrode current collector having a first surface and a second surface opposite to the first surface, a first negative electrode active material layer coated with a negative electrode active material on the first surface, a second negative electrode active material layer coated with the negative electrode active material on the second surface, and a negative electrode uncoated portion on which the negative electrode active material is not coated, and a length of the first negative electrode active material layer is different from that of the second negative electrode active material layer.

2. The cylindrical secondary battery as claimed in claim 1, wherein the negative electrode uncoated portion comprises:
a first front-end negative electrode uncoated portion formed on the first surface of the negative electrode current collector and positioned at a winding front end;
a first terminating-end negative electrode uncoated portion formed on the first surface of the negative electrode current collector and positioned at a winding terminating end;
a first upper-end negative electrode uncoated portion formed on the first surface of the negative electrode current collector and positioned at an upper end;
a second front-end negative electrode uncoated portion formed on the second surface of the negative electrode current collector and positioned at the winding front end;
a second terminating-end negative electrode uncoated portion formed on the second surface of the negative electrode current collector and positioned at the winding terminating end; and
a second upper-end negative electrode uncoated portion formed on the second surface of the negative electrode current collector and positioned at the upper end.

3. The cylindrical secondary battery as claimed in claim 2, wherein the first front-end negative electrode uncoated portion has a larger length than the second front-end negative electrode uncoated portion.

4. The cylindrical secondary battery as claimed in claim 2 or claim 3,
wherein the second terminating-end negative electrode uncoated portion has a larger length than the first terminating-end negative electrode uncoated portion.

5. The cylindrical secondary battery as claimed in any one of claims 2 to 4, wherein the first upper-end negative electrode uncoated portion and the second upper-end negative electrode uncoated portion are continuously formed from the winding front end to the winding terminating end.

6. The cylindrical secondary battery as claimed in any one of claims 2 to 4, wherein the first upper-end negative electrode uncoated portion and the second upper-end negative electrode uncoated portion are separated into a plurality of tabs through notching or cutting.

7. The cylindrical secondary battery as claimed in claim 6, wherein the first upper-end negative electrode uncoated portion and the second upper-end negative electrode uncoated portion are not provided in some regions of the winding front end and some regions of the winding terminating end.

8. The cylindrical secondary battery as claimed in any one of claims 2 to 7, wherein the second terminating-end negative electrode uncoated portion contacts a side portion of the case.

9. The cylindrical secondary battery as claimed in any one of claims 2 to 7, wherein the separator extends to cover the second terminating-end negative electrode uncoated portion and contacts a side portion of the case.

10. The cylindrical secondary battery as claimed in any one of claims 1 to 9, wherein the positive electrode plate comprises:
a positive electrode current collector having a first surface and a second surface opposite to the first surface;
a first positive electrode active material layer coated with a positive electrode active material on the first surface;
a second positive electrode active material layer coated with the positive electrode active material on the second surface; and
a positive electrode uncoated portion on which the positive electrode active material is not coated.

11. The cylindrical secondary battery as claimed in claim 10, wherein the first positive electrode active material layer and the second positive electrode active material layer are continuously formed from a winding front end to a winding terminating end.

12. The cylindrical secondary battery as claimed in claim 10 or claim 11, wherein the positive electrode uncoated portion is at a lower end of the positive electrode current collector and is continuously formed from a winding front end to a winding terminating end.

13. The cylindrical secondary battery as claimed in claim 10 or claim 11, wherein the positive electrode uncoated portion is separated into a plurality of tabs through notching or cutting, optionally wherein the positive electrode uncoated portion is not provided in some regions of a winding front end and some regions of a winding terminating end.

14. The cylindrical secondary battery as claimed in claim 10, wherein the positive electrode uncoated portion comprises:
a first front-end positive electrode uncoated portion formed on the first surface of the positive electrode current collector and positioned at a winding front end;
a first terminating-end positive electrode uncoated portion formed on the first surface of the positive electrode current collector and positioned at a winding terminating end;
a first lower-end positive electrode uncoated portion formed on the first surface of the positive electrode current collector and positioned at the lower end; and
a second lower-end positive electrode uncoated portion formed on the second surface of the positive electrode current collector and positioned at the lower end, optionally wherein a length of the first front-end positive electrode uncoated portion corresponds to a length of one turn of winding of the positive electrode plate.

15. The cylindrical secondary battery as claimed in claim 10, wherein the positive electrode uncoated portion comprises:
a first front-end positive electrode uncoated portion formed on the first surface of the positive electrode current collector and positioned at a winding front end;
a first terminating-end positive electrode uncoated portion formed on the first surface of the positive electrode current collector and positioned at a winding terminating end;
a first lower-end positive electrode uncoated portion formed on the first surface of the positive electrode current collector and positioned at the lower end;
a second front-end positive electrode uncoated portion formed on the second surface of the positive electrode current collector and positioned at the winding front end;
a second terminating-end positive electrode uncoated portion formed on the second surface of the positive electrode current collector and positioned at the winding terminating end; and
a second lower-end positive electrode uncoated portion formed on the second surface of the positive electrode current collector and positioned at the lower end, optionally wherein a length of the first front-end positive electrode uncoated portion is greater than a length of the second front-end positive electrode uncoated portion.
